# EUROPEAN PATENT SPECIFICATION

(11) **EP 1 747 963 B1**
(45) Date of publication and mention of the grant of the patent: **24.11.2010**
(21) Application number: 06117367.0
(22) Date of filing: 18.07.2006
(51) Int. Cl.: B62B 9/16

(54) **Anti-dirt device for a wheeled vehicle adapted to transport infants and/or children**
Anti-Schmutz Vorrichtung für einen Kinderwagen
Dispositif anti-boue pour une voiture d'enfant

(30) Priority: 29.07.2005 IT TO20050532
(43) Date of publication of application: 31.01.2007
(73) Proprietor: CO Proget S.R.L., 10040 Rivalta di Torino (IT)
(72) Inventor: Accossato, Angelo, 10136, Torino (IT); Accossato, Claudio, 10136, Torino (IT)
(74) Representative: Dini, Roberto

(56) References cited:
- DE-A1- 1 755 910
- DE-A1- 1 922 835
- DE-U1- 29 621 645
- US-A- 2 740 643

## Description

The present invention relates to an anti-dirt device for a wheeled vehicle, in particular adapted to transport infants and children, such as a pushchair or a pram.

It is known that wheeled vehicles currently available on the market for transporting infants and children comprise a frame having rods to the lower ends of which wheels are mounted, generally three or four depending on the vehicle model.

It is also known that said wheeled vehicles are used both in environments with substantially clean paving, such as houses or offices, and in environments with dirty paving, such as streets, sidewalks, gardens or parks, and in general in outdoor places.

The vehicle wheels are therefore subject to the action exerted by the dirt in said environments with dirty paving, which dirt may also deposit on the wheels themselves: let us consider, for example, the condition of the wheels of a pushchair at the end of an outdoor walk in rainy or damp weather.

For example, when using pushchairs or prams currently available on the market, it is unadvisable to step into the house right after having used the pushchair or the pram outdoor without first cleaning the wheels.

This preventive cleaning is very demanding, however, because it requires much time and because it is difficult to carry it out in a sufficiently effective way.

The most common solution is therefore to leave the pushchair or the pram at the door step, thus causing evident cluttering problems when the vehicle is left e.g. on the landing of a staircase in a building, or giving rise to the risk of theft when the vehicle is left outside the house and within anybody's reach.

In addition to the above drawbacks, there is also the non-negligible inconvenience of having to pick up the child or infant when entering the house, at the high risk of waking him/her up, if he/she was asleep, or anyway of having to move him/her from his/her comfortable position in the pushchair or the pram.

Similar problems arise with apparatus equipped with wheels for domestic use which can be used both indoors and outdoors: vacuum cleaners, deck chairs, children's bicycles, wheelchairs for disabled people, trolleys for transporting goods, and so on.

The object of the present invention is therefore to provide an anti-dirt device for a wheeled vehicle, in particular adapted to transport infants or children, like e.g. a pushchair or a pram, which can be used both in environments with very dirty paving and in environments with substantially clean paving and which makes it unnecessary to clean the wheels, in particular when the vehicle is used in an indoor environment after having been used in an outdoor environment.

The inventive idea underlying the present invention provides an anti-dirt device for a wheeled vehicle, in particular adapted to transport infants or children, such as a pushchair or a pram, to which, on each rod of its frame, a wheel assembly is secured which consists of two wheels, one of which can be used in an environment with substantially clean paving, e.g. indoor environments, and the other one can be used in environments where the paving may be very dirty, e.g. outdoor environments. An example of such an anti-dirt device is disclosed in document DE 17 55 910 AI. The position of the wheels is switched appropriately through a suitable control member, e.g. located on the handlebar of the pushchair.

Either the wheels for environments with substantially clean paving or those for environments with dirty paving are used, depending on the paving of the environment wherein the wheeled vehicle is used. In this way, the wheels for environments with substantially clean paving are always clean, or at least they are much less soiled than the wheels for environments with dirty paving, and anyway their degree of dirtiness can be tolerated in an environment with substantially clean paving.

It is a further object of the present invention to provide an anti-dirt device for a wheeled vehicle, in particular adapted to transport infants or children, like a pushchair or a pram, which can be universally adapted to any type of wheeled vehicle.

According to the present invention, the anti-dirt device is provided with means allowing to secure said device to any wheeled transport vehicle, like pushchairs or prams for children or infants, thus making it possible to produce and sell it as a kit. As an alternative, the device may be already integrated when manufacturing the wheeled vehicle, in particular to prams and to pushchairs for transporting children or infants.

According to a further aspect of the invention, the wheels are so arranged that any dirt deposited on the wheels for environments with dirty paving is collected on a collection surface of a support located on the wheels themselves, and therefore cannot soil an environment with substantially clean paving.

According to a further aspect of the invention, the support located on the wheels acts both as a surface for collecting dirt and as a mudguard, thus providing the wheeled vehicle with further protection against any soiling caused by splashes of water, mud, etc.

These and other objects of the invention are achieved through the anti-dirt device for wheeled vehicles, in particular for vehicles adapted to transport infants and/or children, as claimed in the annexed claims.

The above objects will become apparent from the detailed description of the anti-dirt device for wheeled vehicles; in particular, the following description will refer to vehicles adapted to transport infants and/or children according to an embodiment of the invention with particular reference to the annexed drawings, wherein:
- Figs. 1, 2a and 2b are a perspective view, a sectional side view and a sectional transversal view, respectively, of an anti-dirt device for a wheeled vehicle adapted to transport infants and/or children, according to a first embodiment of the invention;
- Figs. 3a and 3b are perspective views of a wheeled vehicle adapted to transport infants and/or children, comprising four anti-dirt devices according to the first embodiment of the invention mounted to an existing vehicle and to a vehicle already incorporating said devices during the manufacturing stage, respectively;
- Figs. 4a and 4b are front views of an anti-dirt device for a wheeled vehicle adapted to transport infants and/or children in a first and a second operative positions, respectively, according to a second embodiment of the invention;
- Figs. 5a, 5b and 5c are a front section and two side sections, respectively, along the lines Vb-Vb and Vc-Vc of Fig. 5a of the anti-dirt device of Fig. 4a or 4b.
- Figs. 6a and 6b, 7a and 7b are a perspective view from the inner and outer sides, a sectional side view and a front view, respectively, of an anti-dirt device for a wheeled vehicle adapted to transport infants and/or children according to a third embodiment of the invention;

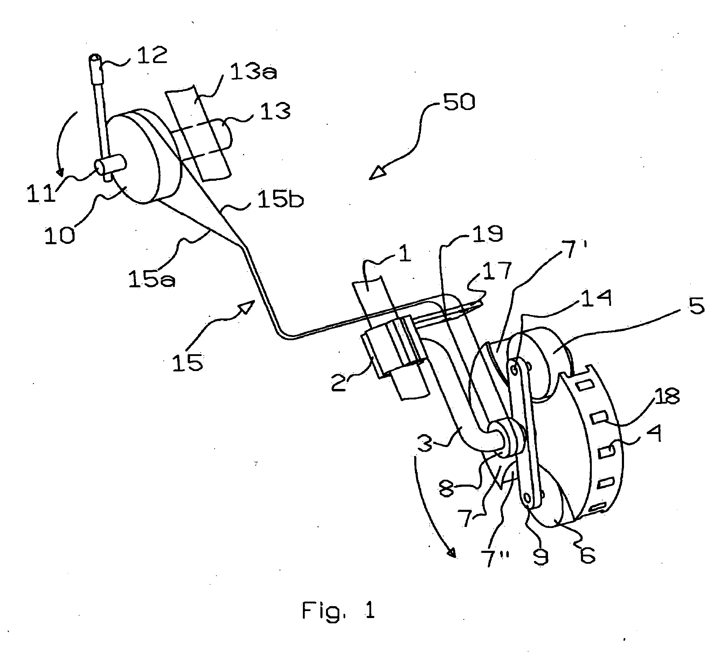

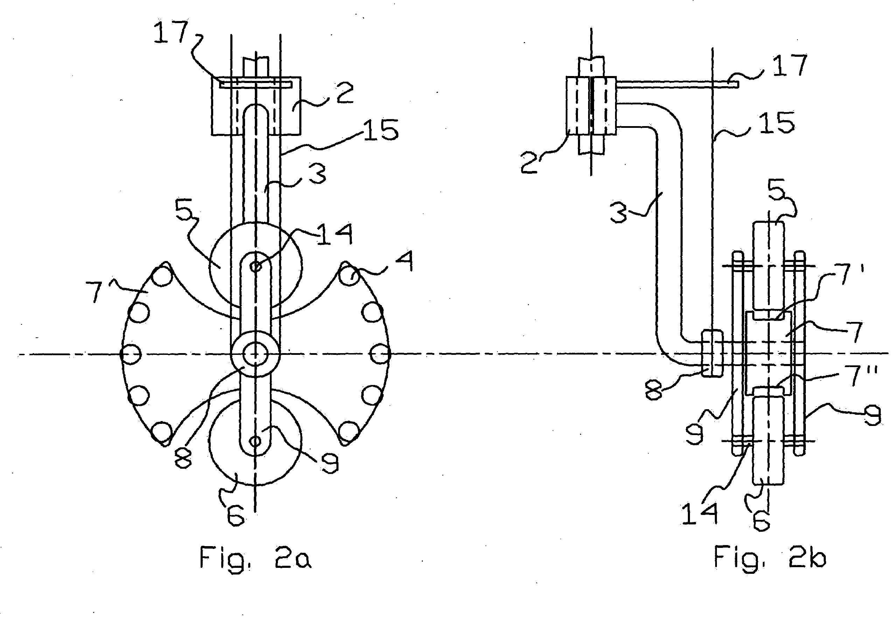

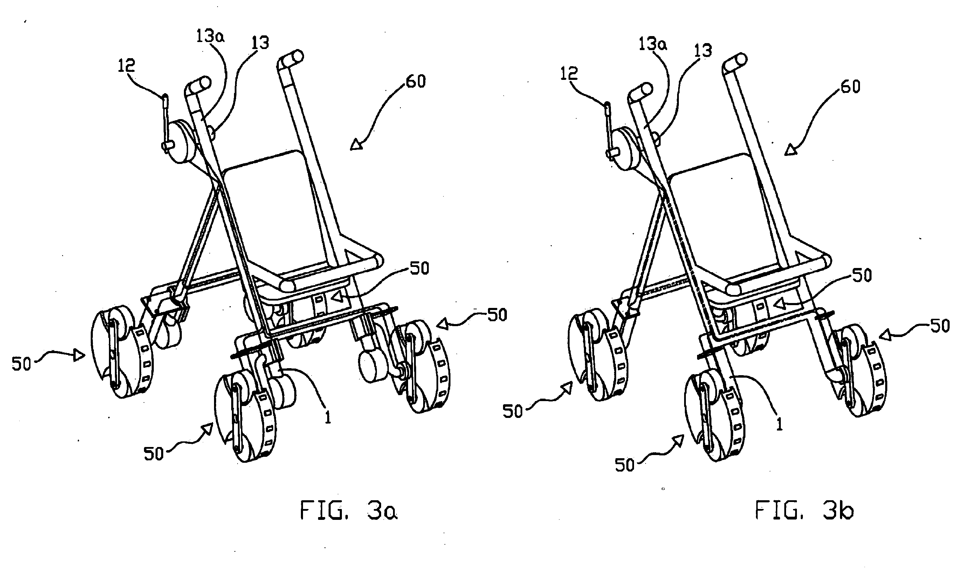

Figs. 1, 2a and 2b illustrate an anti-dirt device 50 adapted to be secured, through appropriate securing means 2 and 13, to a vehicle 60 for transporting infants and/or children, visible in Fig. 3, of which Figs. 1, 2a and 2b show a portion of a wheel carrier rod 1 and a portion of a handlebar 13a.

The anti-dirt device 50 for wheeled vehicles adapted to transport children and/or infants according to the invention comprises a wheel assembly consisting of a first wheel 5, adapted to support the vehicle in environments with substantially clean paving, and a second wheel 6, adapted to support the vehicle in environments with dirty paving.

By environment with dirty paving it is meant an environment wherein the paving is very dirty for the wheels 5,6 of the vehicle 60, e.g. like streets, sidewalks, gardens, parks and floors of public buildings, whereas by environment with substantially clean paving it is meant an environment wherein the paving has a very low degree of dirtiness, e.g. like a domestic environment or a private office.

When they are in the operative position, i.e. when they are adapetd to transport an infant or a child in an environment with substantially clean paving or in an environment with dirty paving, the wheels 5,6 are aligned vertically in such a way that one of said wheels 5,6 contacts the paving and the other one of said wheels 5,6 is lifted over the paving.

The wheels 5,6 are connected to each other through two rigid supports 9 and are supported by their respective wheel carrier rotating pins 14.

An arm 3 connects rigid supports 9 to a lower portion of a wheel carrier rod 1 of vehicle 60 through a clamp 2 of a known type.

On a mudguard/dirt collector element 7 having a substantially circular profile, made as one element and also supported by arm 3, two concave regions 7' and 7" are obtained which are located on opposite ends relative to the centre of the element 7 and arranged under the first wheel 5, or wheel for environments with substantially clean paving, and above the second wheel 6, or wheel for environments with dirty paving, respectively.

For the wheel being in the operative transport position, in particular wheel 6 in Fig. 1, element 7 advantageously acts as a mudguard to protect the pushchair as a whole, and specifically inoperative wheel 5, against any soiling which may take place when wheel 6 is turning; for the wheel being in the inoperative transport position, in particular wheel 5 in Fig. 1, element 7 advantageously acts as a dirt collector to collect any dirt which may fall by gravity from wheel 5.

In order to carry out this double function as a mudguard and as a dirt collector, concave regions 7' and 7" of element 7 advantageously have seats being larger than the diameter of wheels 5,6. Along the periphery of element 7, except on concave regions 7',7", there is also a plurality of preferably equidistant idle rollers 4, a portion of which protrudes from suitable slots 18 obtained on the periphery of mudguard/dirt collector element 7.

Means for controlling anti-dirt device 50, necessary for switching the positions of wheels 5 and 6, comprise a control member secured to the handlebar of vehicle 60 through a handlebar mount 13 and comprising a control reel 10 and a reel carrier pin 11 to which a control lever 12 is fastened. The control means of anti-dirt device 50 also comprise a transmission reel 8, arranged between rigid support 9 for wheels 5,6 and arm 3, and a preferably sheathed cable 15, wound between control reel 10 and transmission reel 8.

Cable 15, comprising an outward portion 15a and a return portion 15b, is suitably routed through two sheath housing holes 19 on a bracket 17 developing crosswise from clamp 2 so as to allow for the switching movement of wheels 5,6.

The following will describe the procedure for using te anti-dirt device 50 when, after having used vehicle 60 in an environment with dirty paving, one decides to use it in an environment with substantially clean paving.

By turning control lever 12, secured to the handlebar of wheeled vehicle 60 through mount 13, control reel 10 is rotated and pulls cable 15 which, being secured to transmission reel 8, causes the rotation of rigid support 9, which in turn rotates mudguard/dirt collector element 7 integral with wheels 5,6.

This operation allows to switch positions between wheel 5, adapted to be used in an environment with substantially clean paving, and wheel 6, adapted to be used in an environment with dirty paving. Advantageously, the position switching between wheels 5 and 6 is facilitated by the fact that mudguard/dirt collector element 7 and peripheral rollers 4 rest continuously on the paving.

Thanks to the particular structure of mudguard/dirt collector element 7, concave region 7" of the element 7, which before wheels 5,6 were switched worked as a mudguard for wheel 6, will now work, after wheels 5,6 have been switched, as a dirt collector for the same wheel 6.

Advantageously, therefore, after the positions of wheels 5,6 have been switched, any type of dirt being present on wheel 6 will be deposited by gravity on concave region 7" of element 7. Likewise, concave region 7' of element 7, which before wheels 5,6 were switched worked as a dirt collector for wheel 5, will now work, after the positions of wheels 5,6 have been switched, as a mudguard for the same wheel 5.

It is clear that, when one wants to use vehicle 60 in an environment with dirty paving again, it will be necessary to operate control lever 12 again in order to switch positions between wheels 5 and 6.

With reference to Figs. 3a and 3b, anti-dirt device 50 may be either produced as a mounting kit, which may advantageously be mounted to any type of vehicle for transporting infants and/or children, e.g. like a pushchair or a pram (Fig. 3a), or be incorporated in wheeled vehicle 60 during the assembly stage (Fig. 3b). In the latter case, cable 15 is advantageously routed within wheel carrier rods 1 of vehicle 60.

In order to carry out a simultaneous switching between wheels 5 and 6 of a plurality of anti-dirt devices 50 associated with wheeled vehicle 60 through a single actuation of control lever 12, cable 15 is provided with appropriate branches.

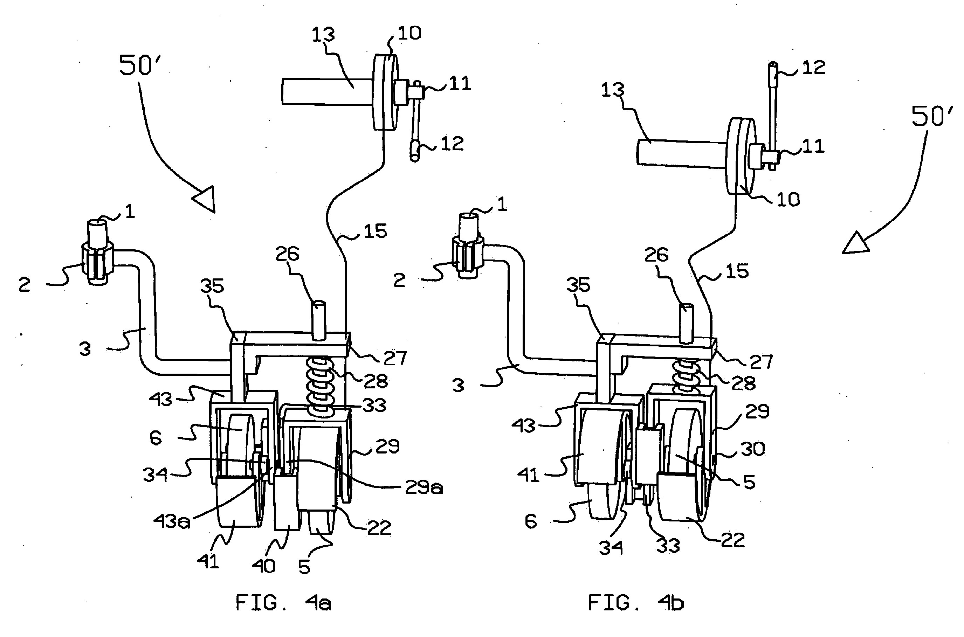

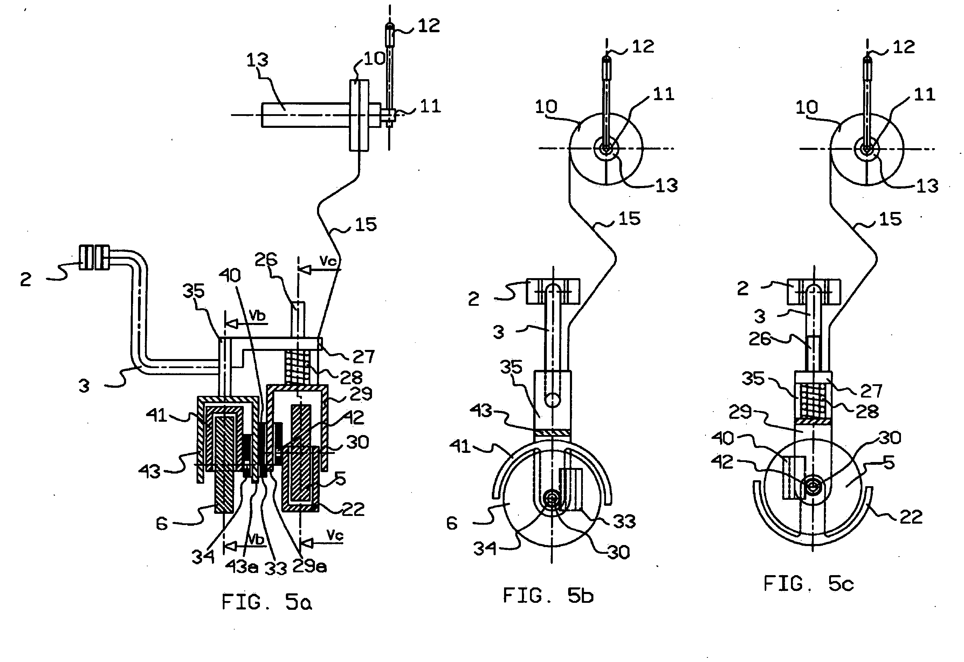

Referring to Figs. 4a, 4b, 5a, 5b and 5c, a second embodiment of the anti-dirt device for wheeled vehicles, in particular adapted to transport infants and/or children, will now be described.

In this second embodiment, anti-dirt device 50' is secured to wheeled vehicle 60 in the same way as anti-dirt device 50, i.e. through securing means 2,13. What changes with respect to the above-described embodiment is the arrangement of wheels 5 and 6 and of the means necessary to switch the operative transport position of wheels 5,6, which will now be illustrated in detail.

In this second embodiment of anti-dirt device 50' according to the invention, arm 3 is connected to an L-shaped structure turned clockwise through 90°, which supports a first support brace 43 for wheel 6 for environments with dirty paving and a second support brace 29 for wheel 5 for environments with substantially clean paving.

Each rotating wheel 5,6 is supported in the respective support brace 29,43 by a respective support pin 30. Support pin 30 also supports a respective mudguard/dirt collector element 41,22, being semicircular in shape, arranged between the respective support brace 29,43 and wheel 5,6.

Mudguard/dirt collector element 41,22 works either as a mudguard or as a dirt collector depending on the operative position of the respective wheel 5,6 it is integral with. In Fig. 4a, for example, element 41 works as a dirt collector for wheel 6, whereas element 22 works as a mudguard for wheel 5, the operative configuration of Fig. 4a being adapted to use anti-dirt device 50' in an environment with substantially clean paving.

Vice versa, in Fig. 4b element 41 works as a mudguard for wheel 6, whereas element 22 works as a dirt collector and as a wheel protector for wheel 5, the operative configuration of Fig. 4b being adapted to use anti-dirt device 50' in an environment with dirty paving.

As clearly shown in Fig. 5a, wheels 5 and 6 never lie in the same horizontal plane in neither operative transport position of vehicle 60, since at least one of two wheels 5,6 must always be in contact with the paving.

Support brace 29 is connected to horizontal portion 27 of the L-shaped support through a pressure spring 28 mounted to a wheel guide pin 26.

The motion of braces 29,43 and of the respective supported elements, i.e. wheels 5,6 and mudguard/dirt collector elements 41,22, is synchronized through a first rack 33 arranged externally to a wall 29a of brace 29 and a second rack 40 arranged externally to a wall 43a of brace 43. Walls 29a and 43a are the walls of the respective braces 29,43 facing each other.

Between walls 29a,43a of braces 29,43 there are also reels 42,34 integral with the respective mudguard/dirt collector elements 41,22.

Supposing that the initial configuration of anti-dirt device 50' is the one shown in Fig. 4a, the procedure for switching to the configuration of Fig. 4b will be as follows.

By turning control lever 12, secured to the handlebar of vehicle 60 through mount 13, control reel 10 is rotated and pulls cable 15 secured to support brace 29, which overcomes the pressure of spring 28 and causes the switching of the operative transport position between wheel 5 for environments with substantially clean paving and wheel 6 for environments with dirty paving, as clearly visible by comparing Figs. 4a and 4b.

At the same time, thanks to the action of racks 33 and 40 and of the respective reels 42,34, mudguard/dirt collector element 22, which before the switching worked as a mudguard, becomes a dirt collector for wheel 5, whereas element 41, which before the switching worked as a dirt collector, becomes a mudguard for wheel 6, as shown in Fig. 4b.

Of course, wheeled vehicle 60 can be brought back to the initial configuration of Fig. 4a by operating control lever 12 again.

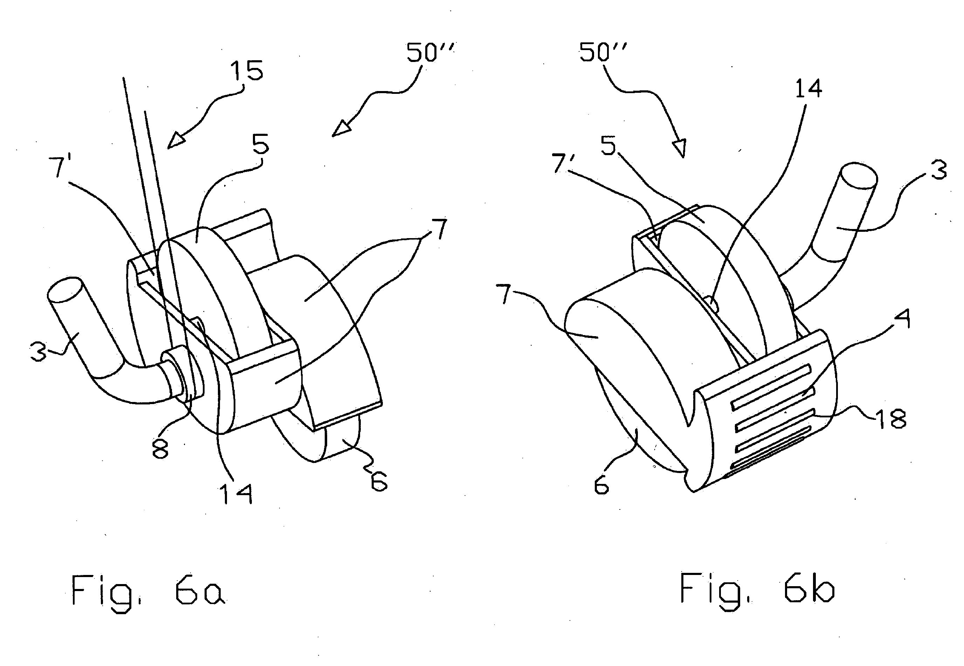

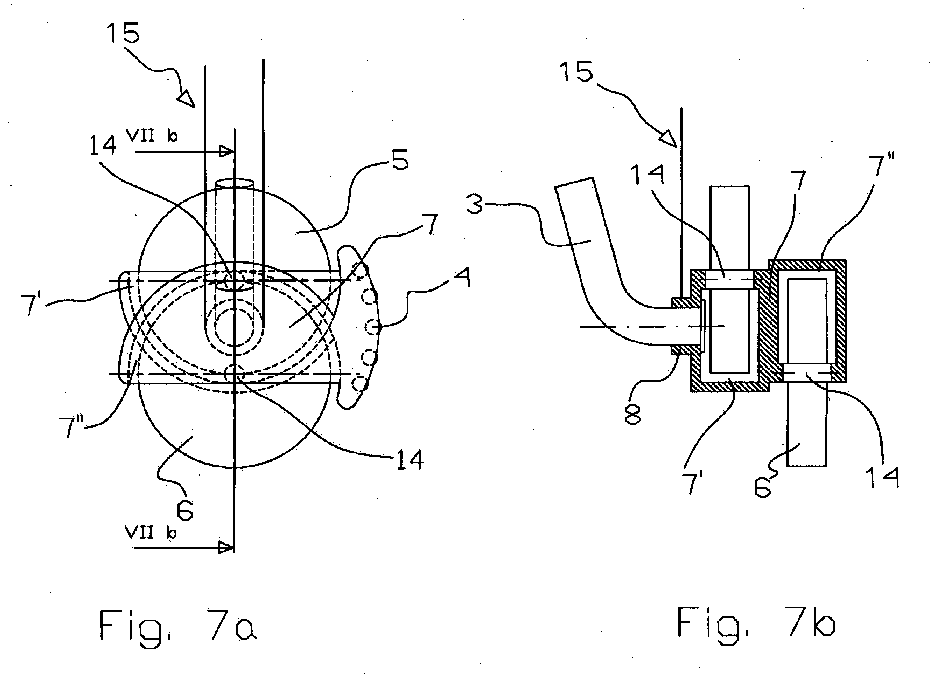

Referring to Figs. 6a, 6b, 7a and 7b, a third embodiment, in particular a variant of the first embodiment, of the anti-dirt device for wheeled vehicles adapted to transport infants and/or children will now be described.

In this third embodiment, anti-dirt device 50" is secured to wheeled vehicle 60 (Figs. 3a and 3b) in the same way as anti-dirt device 50, i.e. through the same securing means 2,13 shown in Fig. 1 and no longer visible in Figs. 6a, 6b, 7a and 7b. Said third embodiment is characterized by a particular arrangement of wheels 5 and 6, which will be illustrated in detail below.

In this third embodiment, anti-dirt device 50" according to the invention comprises a wheel assembly consisting of a first wheel 5, adapted to support the vehicle in environments with substantially clean paving, and a second wheel 6, adapted to support the vehicle in environments with dirty paving.

When they are in the operating position, i.e. when they are adapted to transport an infant or a child in an environment with substantially clean paving or in an environment with dirty paving, wheels 5,6 are simultaneously brought partially side by side in such a way that one of said wheels 5,6 contacts the paving and the other one of said wheels 5,6 is lifted over the paving.

Wheels 5,6 are connected to each other through rigid support 7, rotate and are supported by their respective wheel carrier pins 14.

Arm 3 connects rigid support 7 to a wheel carrier rod of the vehicle as in the first embodiment.

Mudguard/dirt collector rigid support element 7, made as one element and consisting of two properly coupled half-shells, is supported by arm 3, and two concave regions 7' and 7" are obtained thereon which are located on opposite ends relative to the centre of element 7, placed side by side and arranged under first wheel 5, or wheel for environments with substantially clean paving, and above second wheel 6, or wheel for environments with dirty paving, respectively.

For the wheel being in the operative transport position, in particular wheel 6 in Fig. 6a, element 7 advantageously acts as a mudguard to protect the pushchair as a whole, and in particular inoperative wheel 5, against any soiling which may take place when wheel 6 is turning; for the wheel being in the inoperative transport position, in particular wheel 5 in Fig. 6a, element 7 advantageously acts as a dirt collector to collect any dirt which may fall by gravity from wheel 5.

In order to carry out this double function as a mudguard and as a dirt collector, concave regions 7' and 7" of element 7 advantageously contain respective portions of wheels 5,6. Along a peripheral portion of element 7 there is also a plurality of preferably equidistant idle rollers 4, a portion of which protrudes from suitable slots 18 obtained on the peripheral portion of mudguard/dirt collector element 7.

Means for controlling anti-dirt device 50", necessary to switch positions between wheels 5 and 6, comprise control members as already described above for the first embodiment 50 and shown in Fig. 1, and therefore are no longer illustrated.

The following will describe the procedure for using anti-dirt device 50" when, after having used vehicle 60 (Figs. 3a, 3b) in an environment with dirty paving, one wants to use it in an environment with substantially clean paving.

By turning the control lever, not shown, cable 15 is pulled which, it being secured to transmission reel 8, causes the rotation of mudguard/dirt collector rigid support 7 to which wheels 5,6 are integral with.

This operation allows to switch positions between wheel 5, adapted to be used in an environment with substantially clean paving, and wheel 6, adapted to be used in an environment with dirty paving. Advantageously, the position switching between wheels 5 and 6 is facilitated by the fact that mudguard/dirt collector rigid element 7 and peripheral rollers 4 rest continuously on the paving.

Thanks to the particular structure of mudguard/dirt collector rigid element 8, concave region 7" of element 7, which before wheels 5,6 were switched worked as a mudguard for wheel 6, will now work, after wheels 5,6 have been switched, as a dirt collector for same wheel 6.

Advantageously, therefore, after the positions of wheels 5,6 have been switched, any type of dirt being present on wheel 6 will be deposited by gravity on concave region 7" of element 7. Likewise, concave region 7' of element 7, which before wheels 5,6 were switched worked as a dirt collector for wheel 5, will now work, after the positions of wheels 5,6 have been switched, as a mudguard for same wheel 5.

It is clear that, in order to use vehicle 60 in an environment with dirty paving again, it will be necessary to switch positions again between wheels 5 and 6.

In comparison with the first embodiment 50 of Fig. 1, this third embodiment of anti-dirt device 50" advantageously allows, the diameter of wheels 5 and 6 being equal, to reduce the diameter of anti-dirt device 50" against an increase of its thickness.

It is clear that the above description is provided by way of a non-limiting example, and that variations and changes are possible without departing from the scope of the invention as defined by the claims.

For example, although the invention has been conceived for wheeled vehicles adapted to transport infants and/or children, in particular pushchairs and prams, it may also be implemented on other types of wheeled vehicles, e.g. wheeled apparatus for domestic-use which may be used both in environments with substantially clean paving and in environments with dirty paving, such as vacuum cleaners, deck chairs, children's bicycles, wheelchairs for disabled people, trolleys for transporting goods, and so on.

For instance, instead of being operated mechanically, the control means for switching the operative position of wheels 5,6 may be operated electrically, e.g. through a push-button. In this case, wheeled vehicle 60 will be provided with an electrical power supply system to supply the control means, e.g. a battery which may be recharged in operation by a dynamo, not shown, driven by at least one of said wheels 5,6.

## Claims

1. Anti-dirt device for a wheeled vehicle (60), in particular adapted to transport infants and/or children, said device (50,50',50") comprising:
- securing means (2,13) to connect said anti-dirt device (50,50',50") to said vehicle (60);
- a wheel assembly comprising a first wheel (5) and a second wheel (6);
- control means comprising a control member (10,11,12) connected to said wheel assembly to control switching between a first operative transport position and a second operative transport position of said vehicle (60), wherein in said first operative transport position said first wheel (5) is adapted to support said vehicle in an environment with substantially clean paving and said second wheel (6) is in an inoperative transport position, and wherein in said second operative transport position said first wheel (5) is in an inoperative transport position and said second wheel (6) is adapted to support said vehicle in an environment with dirty paving,
**characterized in that**
said anti-dirt device comprises mudguard/dirt collector means (7; 41,22) comprising an element (7; 41, 22) arranged externally to said first wheel (5) and said second wheel (6), said element (7; 41, 22) being apt to work either as a mudguard or as a dirt collector depending on the operative position of the respective wheel (5, 6) it is associated, said element (7; 41, 22) being adapted to collect the dirt coming off said first wheel (5) and second wheel (6), respectively, in the inoperative transport position and adapted to protect said second wheel (6) and first wheel (5), respectively, and said vehicle (60) against soiling in both said operative transport positions.

2. Anti-dirt device according to claim 1, **characterized in that** said securing means (2,13) comprise a handlebar mount (13) to secure said control member (10,11,12) to a portion of the handlebar of said vehicle (60).

3. Anti-dirt device according to claim 2, **characterized in that** said securing means (2,13) also comprise a clamp (2) adapted to be secured to a lower portion of a wheel carrier rod of said vehicle (60).

4. Anti-dirt device according to claim 1, **characterized in that** said control member (10,11,12) comprises a control reel (10) and a reel carrier pin (11) to which a control lever (12) is fastened.

5. Anti-dirt device according to claim 1, **characterized in that** said mudguard/dirt collector means (7) are integrated into one single element (7) having a substantially circular profile or consisting of two coupled half-shells, whereon two concave regions (7',7") are obtained which are located in areas corresponding to said first wheel (5) and said second wheel (6), respectively, said element (7) being integral with said wheels (5,6).

6. Anti-dirt device according to claim 5, **characterized in that** said concave regions (7',7") of said one element (7) have respective seats being wider than the diameter of said first wheel (5) and second wheel (6).

7. Anti-dirt device according to claim 6, **characterized in that**, on the periphery of said one element (7), except in said concave regions (7',7"), there is a plurality of preferably equidistant idle rollers (4), a portion of which protrudes from suitable slots (18) obtained on the periphery of said one element (7).

8. Anti-dirt device according to claim 7, **characterized in that** a bracket (17) secured to said clamp (2) comprises two holes (19) for receiving outward (15a) and return (15b) portions of a cable (15) adapted to allow for the switching of said wheels (5,6).

9. Anti-dirt device according to claim 8 and claim 4, **characterized in that** said control means also comprise an arm (3) secured to said camp (2), a rigid support (9) to connect said two wheels (5,6) to each other, a transmission reel (8) interposed between said rigid support (9) and said arm (3), and said cable (15), preferably sheathed, wound between said control reel (10) and said transmission reel (8), so that said control lever (12) can be operated to perform the switching between said first operative transport position and said second operative transport position.

10. Anti-dirt device according to claim 1, **characterized in that** said mudguard/dirt collector means consist of two substantially semicircular elements (41,22) arranged externally to said first wheel (5) and second wheel (6), respectively, so that in both said operative transport positions one (41,22) of said elements acts as a mudguard for the wheel (6,5) in the operative transport position and the other one (22,41) of said elements acts as a dirt collector for the wheel (5,6) in the inoperative transport position, each of said elements (22,41) being integral with the respective wheel (6,5).

11. Anti-dirt device according to claim 10, **characterized in that** said control means also comprise: an arm (3) secured to said clamp (2), said arm (3) being connected to an L-shaped structure turned clockwise through 90° which supports a first support brace (43) for one of said wheels (6) and a second support brace (29) for the other one (5) of said wheels, each wheel (5,6) rotating and supported in the respective support brace (29,43) by a respective support pin (30) and said second support brace (29) being connected to a horizontal portion (27) of said L-shaped structure through a pressure spring (28) mounted to a wheel carrier pin (26); a cable (15) connected to said control reel (10) and to said second support brace (29), adapted to act on said pressure spring (28); a first rack (33) arranged externally to a wall (29a) of said second brace (29) and a second rack (40) arranged externally to a wall (43a) of said first brace (43), said walls (29a,43a) facing each other, a first reel (42) and a second reel (34) integral with the respective mudguard/dirt collector means (41,22) being also present between said walls (29a,43a).

12. Anti-dirt device according to claim 9 or 11, **characterized in that** said cable (15) is routed within a wheel carrier rod (1) of said vehicle (60).

13. Anti-dirt device according to claim 1, **characterized in that** said control means to control switching between said first operative transport position and said second operative transport position are supplied by an electrical power supply system and actuated preferably through a push-button.

14. Anti-dirt device according to claim 13, **characterized in that** said electrical power supply system comprises a battery which may be recharged through a dynamo driven by at least one of said wheels (5,6).

15. Wheeled vehicle (60), in particular adapted to transport infants and/or children, comprising at least one anti-dirt device (50,50',50") according to any of the previous claims.

## Patentansprüche

1. Anti-Schmutz-Gerät für ein Radfahrzeug (60), insbesondere zum Transport von Kleinkindern und/oder Kindern eingerichtet, wobei das Gerät (50, 50', 50") aufweist:
- Befestigungsmittel (2, 13) zum Verbinden des Anti-Schmutz-Gerätes (50, 50', 50") mit dem Fahrzeug (60);
- eine Rad-Anordnung, die ein erstes Rad (5) und ein zweites Rad (6) aufweist;
- Steuermittel, die ein Steuer-Glied (10, 11, 12) aufweisen, welches mit der Rad-Anordnung verbunden ist, um ein Umschalten zwischen einer ersten wirkenden Transportposition und einer zweiten wirkenden Transportposition des Fahrzeugs (60) zu steuern, wobei das erste Rad (5) in der ersten wirkenden Transportposition zum Stützen des Fahrzeuges in einer Umgebung mit im Wesentlichen sauberem Straßenbelag eingerichtet ist und das zweite Rad (6) sich in einer nicht-wirkenden Transportposition befindet, und wobei in der zweiten wirkenden Transportposition das erste Rad (5) sich in einer nicht-wirkenden Transportposition befindet, und das zweite Rad (6) zum Stützen des Fahrzeugs in einer Umgebung mit verschmutztem Straßenbelag eingerichtet ist,
**dadurch gekennzeichnet, dass**
das Anti-Schmutz-Gerät Schutzblech-/Schmutzfänger-Mittel (7; 41, 22) aufweist, welche ein extern zu dem ersten Rad (5) und dem zweiten Rad (6) angeordnetes Element (7; 41, 22) aufweisen, wobei das Element (7; 41, 22) dazu geeignet ist, entweder als Schutzblech oder als Schmutzfänger zu arbeiten, abhängig von der wirkenden Position des jeweiligen Rades (5, 6), welchem es zugeordnet ist, wobei das Element (7,41,22) zum Sammeln des Schmutzes eingerichtet ist, welcher sich jeweils von dem ersten Rad (5) und dem zweiten Rad (6) in der nichtwirkenden Transportposition löst und dazu eingerichtet ist, jeweils das zweite Rad (6) und das erste Rad (5), sowie das Fahrzeug (60) gegen Verschmutzung in beiden wirkenden Transportpositionen zu schützen.

2. Anti-Schmutz-Gerät gemäß Anspruch 1, **dadurch gekennzeichnet, dass** die Befestigungsmittel (2, 13) eine Lenker-Halterung (13) aufweisen, um das Steuerglied (10, 11, 12) an einem Abschnitt des Lenkers des Fahrzeugs (60) zu befestigen.

3. Anti-Schmutz-Gerät gemäß Anspruch 2, **dadurch gekennzeichnet, dass** die Befestigungsmittel (2, 13) weiterhin eine Klammer (2) aufweisen, die dazu eingerichtet ist, an einen unteren Abschnitt der Stange eines Radträgers des Fahrzeugs (60) befestigt zu werden.

4. Anti-Schmutz-Gerät gemäß Anspruch 1, **dadurch gekennzeichnet, dass** das Steuerglied (10, 11, 12) eine Steuer-Spule (10) und einen Spulenträger-Stift (11) aufweist, an welchem ein Steuerhebel (12) befestigt ist.

5. Anti-Schmutz-Gerät gemäß Anspruch 1, **dadurch gekennzeichnet, dass** die Schutzblech-/Schmutzfänger-Mittel (7) in einem einzelnen Element (7) integriert sind, welches ein im Wesentlichen kreisförmiges Profil hat oder aus zwei gekoppelten Halbschalen besteht, worauf zwei konkave Bereiche (7', 7") erhalten sind, welche in Bereichen angeordnet sind, die jeweils dem ersten Rad (5) und dem zweiten Rad (6) entsprechen, wobei das Element (7) und die Räder (5, 6) einstückig sind.

6. Anti-Schmutz-Gerät gemäß Anspruch 5, **dadurch gekennzeichnet, dass** die konkaven Bereiche (7', 7") des einen Elements (7) entsprechende Sitze haben, welche weiter als der Durchmesser des ersten Rades (5) und des zweiten Rades (6) sind.

7. Anti-Schmutz-Gerät gemäß Anspruch 6, **dadurch gekennzeichnet, dass** an der Peripherie des einen Elements (7) mit Ausnahme der konkaven Bereiche (7', 7") eine Mehrzahl vorzugsweise äquidistanter, nicht angetriebener Rollen (4) existiert, von denen ein Abschnitt aus geeigneten Schlitzen (18) hervorsteht, welche an der Peripherie des einen Elements (7) erhalten sind.

8. Anti-Schmutz-Gerät gemäß Anspruch 7, **dadurch gekennzeichnet, dass** ein an der Klammer (2) befestigter Ausleger (17) zwei Löcher (19) zur Aufnahme nach außen führender (15a) und rückführender (15b) Abschnitte eines Kabels (15) aufweist, welches dazu eingerichtet ist, dass Umschalten der Räder (5,6) zu ermöglichen.

9. Anti-Schmutz-Gerät gemäß Anspruch 8 und Anspruch 4, **dadurch gekennzeichnet, dass** die Steuer-Mittel auch einen Arm (3) aufweisen, welcher an der Klammer (2) befestigt ist, eine steife Abstützung (9) zur Verbindung der zwei Räder (5, 6) mit einander, eine Übertragungs-Spule (8), welche zwischen der steifen Abstützung (9) und dem Arm (3) eingefügt ist, und das Kabel (15) aufweisen, welches vorzugsweise ummantelt ist und zwischen der Steuer-Spule (10) und der Übertragungs-Spule (8) gewickelt ist, so dass der Steuer-Hebel (12) betätigt werden kann, um ein Umschalten zwischen der ersten wirkenden Transportposition und der zweiten wirkenden Transportposition auszuführen.

10. Anti-Schmutz-Gerät gemäß Anspruch 1, **dadurch gekennzeichnet, dass** die Schutzblech-/Schmutzfänger-Mittel aus zwei im Wesentlichen halbkreisförmigen Elementen (41, 22) bestehen, welche jeweils extern zu dem ersten Rad (5) und dem zweiten Rad (6) angeordnet sind, so dass in beiden wirkenden Transportpositionen Eines (41, 22) der Elemente als Schutzblech für das Rad (6, 5) in der wirkenden Transportposition agiert und das Andere (22, 41) der Elemente als Schmutzfänger für das Rad (5, 6) in der nichtwirkenden Transportposition agiert, wobei beide Elemente (22, 41) und das jeweilige Rad (6, 5) einstückig sind.

11. Anti-Schmutz-Gerät gemäß Anspruch 10, **dadurch gekennzeichnet, dass** die Steuer-Mittel weiterhin aufweisen: einen Arm (3), welcher an der Klammer (2) befestigt ist, wobei der Arm (3) mit einer im Uhrzeigersinn um 90° gedrehten L-förmigen Struktur verbunden ist, die einen ersten Stütz-Halter (43) für Eines der Räder (6) sowie einen zweiten Stütz-Halter (29) für das Andere (5) der Räder stützt, wobei jedes Rad (5,6) rotiert und in dem jeweiligen Stütz-Halter (29, 43) mittels eines jeweiligen Stütz-Stiftes (30) gestützt wird, und wobei der zweite Stütz-Halter (29) mit einem horizontalen Abschnitt (27) der L-förmigen Struktur mittels einer Druckfeder (28) verbunden ist, welche an einem Radträger-Stift (26) montiert ist; ein Kabel (15), das mit der Steuer-Spule (10) und dem zweiten Stütz-Halter (29) verbunden und dazu eingerichtet ist, auf die Druckfeder (28) einzuwirken; ein erstes Gestell (33), welches extern zu einer Wand (29a) des zweiten Halters (29) angeordnet ist sowie ein zweites Gestell (40), welches extern zu einer Wand (43a) des ersten Halters (43) angeordnet ist, wobei die Wände (29a, 43a) einander zugewandt sind, wobei eine erste Spule (42) und eine zweite Spule (34), welche mit dem jeweiligen Schutzblech-/Schmutzfänger-Mittel (41, 22) einstückig sind, ebenfalls zwischen den Wänden (29a, 43a) anwesend sind.

12. Anti-Schmutz-Gerät gemäß Anspruch 9 oder 11, **dadurch gekennzeichnet, dass** das Kabel (15) innerhalb einer Radträger-Stange (1) des Fahrzeugs (60) geführt ist.

13. Anti-Schmutz-Gerät gemäß Anspruch 1, **dadurch gekennzeichnet, dass** die Steuer-Mittel zum Steuern des Umschaltens zwischen der ersten wirkenden Transportposition und der zweiten wirkenden Transportposition von einem elektrischen Energieversorgungssystem versorgt werden und vorzugsweise mittels eines Druckknopfs betätigt werden.

14. Anti-Schmutz-Gerät gemäß Anspruch 13, **dadurch gekennzeichnet, dass** das elektrische Energieversorgungssystem eine Batterie aufweist, welche mittels eines Dynamos wieder aufgeladen werden kann, der von mindestens einem der Räder (5, 6) angetrieben wird.

15. Radfahrzeug (60), insbesondere zum Transport von Kleinkindern und/oder Kindern eingerichtet, welches mindestens ein Anti-Schmutz-Gerät (50, 50', 50") gemäß einem der vorstehenden Ansprüche aufweist.

## Revendications

1. Dispositif anti-boue destiné à une voiture à roues (60), adaptée, en particulier, pour transporter des bébés et/ou des enfants, ledit dispositif (50, 50', 50") comprenant :
- des moyens de fixation (2, 13) pour connecter ledit dispositif anti-boue (50, 50', 50") à ladite voiture (60) ;
- un ensemble de roues comportant une première roue (5) et une seconde roue (6) ;
- des moyens de commande comprenant un élément de commande (10, 11, 12) raccordé au dit ensemble de roues afin de commander une commutation entre une première position fonctionnelle de transport et une seconde position fonctionnelle de transport de ladite voiture (60), dans lequel, dans ladite première position fonctionnelle de transport, ladite première roue (5) est adaptée pour supporter ladite voiture dans un environnement doté d'une chaussée essentiellement propre et ladite seconde roue (6) se trouve dans une position non fonctionnelle de transport, et dans lequel, dans ladite seconde position fonctionnelle de transport, ladite première roue (5) se trouve dans une position non fonctionnelle de transport et ladite seconde roue (6) est adaptée pour supporter ladite voiture dans un environnement doté d'une chaussée boueuse,
**caractérisé en ce que**
ledit dispositif anti-boue comprend des moyens de garde-boue/de récupération de la boue (7 ; 41, 22) comportant un élément (7 ; 41, 22) disposé extérieurement par rapport à ladite première roue (5) et à ladite seconde roue (6) ledit élément (7 ; 41, 22) étant apte à agir, soit comme un garde-boue, soit comme un collecteur de boue en fonction de la position fonctionnelle de la roue respective (5, 6) à laquelle il est associé, ledit élément (7 ; 41, 22) étant adapté pour collecter la boue provenant de ladite première roue (5) et de ladite seconde roue (6) respectivement, dans la position de transport non fonctionnelle, et étant adapté pour protéger ladite seconde roue (6) et ladite première roue (5), respectivement, et ladite voiture (60) de la salissure dans les deux dites positions fonctionnelles de transport.

2. Dispositif anti-boue selon la revendication 1, **caractérisé en ce que** lesdits moyens de fixation (2, 13) comportent une monture de guidon (13) pour fixer ledit élément de commande (10, 11, 12) à une partie du guidon de ladite voiture (60).

3. Dispositif anti-boue selon la revendication 2, **caractérisé en ce que** lesdits moyens de fixation (2, 13) comportent également un élément de blocage (2) adapté pour être fixé à une partie inférieure d'une tige de support de roue de ladite voiture (60).

4. Dispositif anti-boue selon la revendication 1, **caractérisé en ce que** ledit élément de commande (10, 11, 12) comprend une poulie de commande (10) et une broche de support de la poulie (11) à laquelle un levier de commande (12) est fixé.

5. Dispositif anti-boue selon la revendication 1, **caractérisé en ce que** lesdits moyens de garde-boue/de collecteur de boue (7) sont intégrés en un seul élément (7) présentant un profil essentiellement circulaire ou constitué de deux demi-coques couplées, sur lesquelles deux zones concaves (7', 7") sont réalisées, lesquelles sont situées dans des régions correspondantes à ladite première roue (5) et à ladite seconde roue (6), respectivement, ledit élément (7) étant solidaire desdites roues (5, 6).

6. Dispositif anti-boue selon la revendication 5, **caractérisé en ce que**, lesdites régions concaves (7', 7") dudit élément (7) comportent des embases respectives qui sont plus larges que le diamètre de ladite première roue (5) et de ladite seconde roue (6).

7. Dispositif anti-boue selon la revendication 6, **caractérisé en ce que**, sur la périphérie dudit élément (7), sauf dans lesdites régions concaves (7', 7"), il existe une pluralité de rouleaux intermédiaires équidistants, de préférence, (4), dont une partie fait saillie à partir de fentes appropriées (18) formées sur la périphérie dudit élément (7).

8. Dispositif anti-boue selon la revendication 7, **caractérisé en ce qu'**un support (17) fixé au dit élément de blocage (2) comporte deux trous (19) permettant de recevoir des portions de sortie (15a) et de retour (15b) d'un câble (15) adapté pour permettre la commutation desdites roues (5, 6).

9. Dispositif anti-boue selon la revendication 8 et la revendication 4, **caractérisé en ce que** lesdits moyens de commande comportent également un bras (3) fixé au dit élément de blocage (2), un support rigide (9) pour raccorder lesdites deux roues (5, 6) l'une à l'autre, une bobine de transmission (8) intercalée entre ledit support rigide (9) et ledit bras (3), et **en ce que** ledit câble (15), sous gaine de préférence, est enroulé entre ladite poulie de commande (10) et ladite poulie de transmission (8), de sorte que ledit levier de commande (12) peut être actionné pour exécuter la commutation entre ladite première position fonctionnelle de transport et ladite seconde position fonctionnelle de transport.

10. Dispositif anti-boue selon la revendication 1, **caractérisé en ce que** lesdits moyens de garde-boue/de collecteur de boue sont constitués de deux éléments essentiellement semi-circulaires (41, 22) disposés à l'extérieur par rapport à ladite première roue (5) et à ladite seconde roue (6), respectivement, de sorte que dans les deux dites positions fonctionnelles de transport l'un (41, 22) desdits éléments agisse comme un garde-boue pour la roue (6, 5) dans la position fonctionnelle de transport, et que l'autre (22, 41) desdits éléments agisse comme un collecteur de boue pour la roue (5, 6) dans la position de transport non fonctionnelle, chacun desdits éléments (22, 41) étant solidaire de la roue respective (6, 5).

11. Dispositif anti-boue selon la revendication 10, **caractérisé en ce que** lesdits moyens de commande comprennent également : un bras (3) fixé au dit élément de blocage (2), ledit bras (3) étant raccordé à une structure configurée en L tournée dans le sens des aiguilles d'une montre de 90°, laquelle supporte une première armature de support (43) destinée à l'une desdites roues (6) et une seconde armature de support (29) pour l'autre desdites roues (5), chaque roue (5, 6) tournant et étant supportée dans l'armature de support respective (29, 43) par une broche de support respective (30) et ladite seconde armature de support (29) étant connectée à une partie horizontale (27) de ladite structure configurée en L par l'intermédiaire d'un ressort de pression (28) monté sur une broche de support de roue (26) ; un câble (15) étant connecté à ladite poulie de commande (10) et à ladite seconde armature de support (29), adapté pour agir sur ledit ressort de pression (28) ; une première crémaillère (33) étant agencée à l'extérieur d' une paroi (29a) de ladite seconde armature (29) et une seconde crémaillère (40) étant agencée à l'extérieur d'une paroi (43a) de ladite première armature (43), lesdites parois (29a, 43a) se faisant face l'une l'autre, une première poulie (42) et une seconde poulie (34) solidaires des moyens de garde-boue/de collecteur de boue (41, 42) étant également présentes entre lesdites parois (29a, 43a).

12. Dispositif anti-boue selon la revendication 9 ou 11, **caractérisé en ce que** ledit câble (15) est acheminé à l'intérieur d'une tige de support de roue (1) de ladite voiture (60).

13. Dispositif anti-boue selon la revendication 1, **caractérisé en ce que** lesdits moyens de commande pour commander la commutation entre ladite première position fonctionnelle de transport et ladite seconde position fonctionnelle de transport sont alimentés par un système d'alimentation en courant électrique et activés, de préférence, par l'intermédiaire d'un bouton poussoir.

14. Dispositif anti-boue selon la revendication 13, **caractérisé en ce que** ledit système d'alimentation en courant électrique comporte une batterie qui peut être rechargée par une dynamo entraînée par au moins l'une desdites roues (5, 6).

15. Voiture à roues (60) adaptée, en particulier, pour transporter des bébés et/ou des enfants comportant au moins un dispositif anti-boue (50, 50', 50") selon l'une quelconque des revendications précédentes.
